# EUROPÄISCHE PATENTSCHRIFT

(11) **EP 1 820 950 B1**
(45) Veröffentlichungstag und Bekanntmachung des Hinweises auf die Patenterteilung: **03.06.2009**
(21) Anmeldenummer: 07002026.8
(22) Anmeldetag: 31.01.2007
(51) Int. Cl.: F02C 7/26

(54) **Zündanlage für ein Gasturbinentriebwerk**
Ignition system for a gas turbine engine
Installation d' allumage pour moteur à turbine à gaz

(30) Priorität: 17.02.2006 DE 102006007832
(43) Veröffentlichungstag der Anmeldung: 22.08.2007
(73) Patentinhaber: Rolls-Royce Deutschland Ltd & Co KG, 15827 Blankenfelde-Mahlow (DE)
(72) Erfinder: Argüello, Gustavo, 14624 Dallgow-Döberitz (DE)

(56) Entgegenhaltungen:
- EP-A- 0 468 253
- US-B1- 6 195 247

## Beschreibung

Die Erfindung betrifft eine Zündanlage für ein Gasturbinentriebwerk, mit jeweils an erste und zweite Zündkerzen angeschlossenen ersten und zweiten Zündeinheiten, die jeweils mit einem ersten und zweiten Stromversorgungsbus und einer ersten und zweiten Steuereinheit zur Aktivierung der Stromzufuhr verbunden sind.

Zündanlagen der oben genannten Art zum Zünden des in die Brennkammer eines Gasturbinentriebwerks eingebrachten Brennstoffs beim Starten des Triebwerks sind hinreichend bekannt. Prinzipiell sind zum Starten nur eine Zündeinheit und eine Zündkerze erforderlich, jedoch wird aus Sicherheitsgründen und um allen Betriebsbedingungen, zum Beispiel für ein kontinuierliches Zünden bei extrem hoher Feuchtigkeit oder beim erneuten Starten eines während des Flugbetriebs ausgefallenen Triebwerks, gerecht zu werden, ein kombiniertes System aus zwei vom Flugzeug mit Gleich- bzw. Wechselstrom versorgten Zündeinheiten und jeweils an diese angeschlossener Zündkerze installiert. Gleichermaßen sind auch zur elektronischen Triebwerkskontrollsteuerung zwei Steuereinheiten vorgesehen, wobei jede der beiden elektronischen Triebwerkskontrollsteuereinheiten jeweils an beide Zündeinheiten angeschlossen ist, um die Stromzufuhr von beiden Steuereinheiten zu den Zündeinheiten zu signalisieren und damit die Erzeugung der erforderlichen Zündspannung für den Zündvorgang auszulösen. An die jeweilige Zündeinheit ist jeweils ein Stromversorgungsbus zur Bereitstellung der Energie (P1 bzw. P2) angeschlossen.

Die zuvor beschriebene kombinierte Zündanlage aus zwei Zündeinheiten und zwei Zündkerzen ist jedoch dann nicht ausreichend sicher funktionsfähig, wenn aus irgendeinem Grund die Energiezufuhr über den einen oder den anderen Stromversorgungsbus zu der betreffenden Zündeinheit nicht gewährleistet ist.

Aus der US-A-6195247 ist ein Triebwerkszündungssteuersystem unter Verwendung einer Mehrzahl von Stromversorgungsbussen und eines Triebwerksregelungscomputers bekannt, das als Teil des Zündungssystems eine durch eine volldigitale Triebwerksregelung (FADEC) gesteuerte Erregerschaltung umfasst. Das System lässt die automatische Detektion eines Erregereinrichtungsausfalls und ein automatisches Umschalten zu einer funktionsfähigen Erregereinrichtung zu.

Der Erfindung liegt die Aufgabe zugrunde, eine Zündanlage der eingangs erwähnten Art mit einfachen Mitteln so auszubilden, dass selbst beim Ausfallen einer der beiden Stromzuführungen dennoch die Funktion der betreffenden Zündeinheit und damit der gesamten Zündanlage sichergestellt ist.

Erfindungsgemäß wird die Aufgabe mit einer Zündanlage gemäß den Merkmalen des Patentanspruchs 1 gelöst.

Der Kern der Erfindung besteht mit anderen Worten in der Zuführung des für jede Zündeinheit vorgesehenen Stroms P1 und P2 über einen jeweils einen Normalbus und einen Notfallbus umfassenden Stromversorgungsbus und ein an die Stromzuführungsleitung angeschlossenes Relais zu der jeweiligen Zündeinheit. Bei einem Ausfall der Stromzufuhr zu der einen (ersten) Zündspule wird das zuvor mit Strom aus dem Normalbus versorgte Relais stromlos und damit mechanisch (automatisch)auf den nicht mit dem Relais verbundenen Notfallbus umgeschaltet, so dass die betreffende Zündeinheit mit dem für die andere (zweite) Zündspule vorgesehenen Strom P2 versorgt werden kann. Mittels einer analogen Anordnung wird die andere(zweite) Zündspule üblicherweise mit dem Strom P2 versorgt und bei Ausfall der entsprechenden Stromzuleitung für den Strom P2 mit einem Relais automatisch auf die Stromzuleitung für den Strom P1 umgeschaltet.

Somit ist mit einfachen technischen Mitteln gewährleistet, dass bei einem Fehler in der jeweiligen Stromzuleitung zu der betreffenden Zündeinheit dennoch sofort die erforderliche Stromversorgung gewährleistet ist, und zwar auch dann, wenn ein Relais ausfallen sollte, weil auch in diesem Fall automatisch (mechanisch) auf die andere Stromzuführung umgeschaltet wird. Zudem kann die betreffende Steuereinheit beim Umschalten auf die jeweils andere Stromzufuhr ein Signal empfangen, das über einen Fehler in der Stromzuleitung oder dem Relais informiert.

Vorteilhafte Weiterbildungen der Erfindung sind Bestandteil der Unteransprüche.

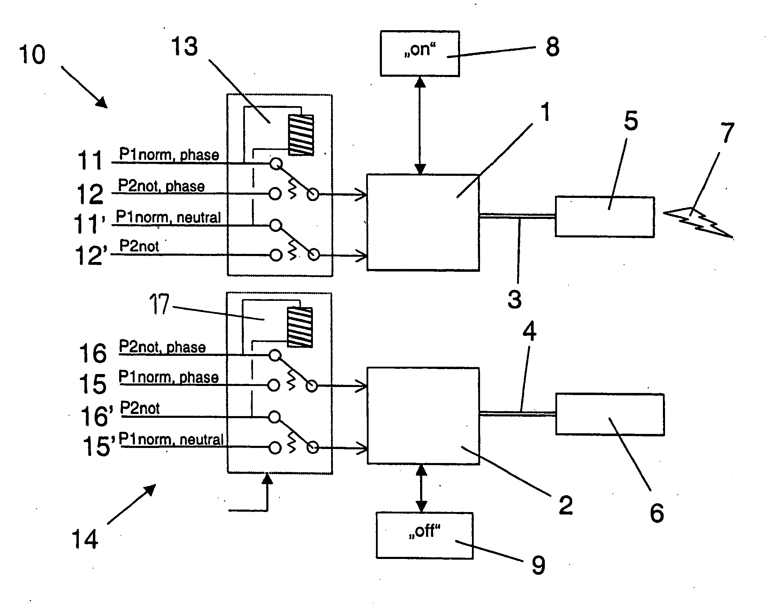

Ein Ausführungsbeispiel der Erfindung wird anhand der Zeichnung, in deren einziger Figur ein Blockschaltbild einer Zündanlage für ein Gasturbinentriebwerk dargestellt ist, mit der auch im Falle des Fehlens einer der Stromzuführungen die Stromversorgung einer der beiden Zündeinheiten gewährleistet ist.

Gemäß dem Blockschaubild umfasst die Zündanlage zwei erste und zweite Zündeinheiten 1 und 2, die über erste und zweite Zündleitungen 3 und 4 mit in der Brennkammer eines Gasturbinentriebwerks angeordneten ersten und zweiten Zündkerzen 5 und 6 verbunden sind. Zur Erzeugung des Zündfunkens 7 liegt - gemäß dem vorliegenden Ausführungsbeispiel - an den Zündeinheiten 1 und 2 eine Wechselspannung von beispielsweise 115 V an. Die Aktivierung der Energiezufuhr erfolgt jedoch durch ein Signal "on" von einer der beiden Steuereinheiten 8 und 9 des Gasturbinentriebwerks, wobei die Zündeinheit 1 der ersten Steuereinheit 8 und die Zündeinheit 2 der zweiten Steuereinheit 9 des Triebwerks zugeordnet ist und im vorliegenden Fall die Zündeinheit 1 den "on"-Befehl von der ersten Steuereinheit 8 zur Energieversorgung erhält.

Die für die Erzeugung des Zündfunkens 7 an einer der Zündkerzen 5 oder 6, hier der Zündkerze 5, erforderliche Energie P1 und P2 wird jeder Zündeinheit 1 und 2 über einen ersten Stromversorgungsbus 10, der einen ersten Normalbus 11, 11' (P1_{norm,phase}, P1_{norm,neutral}) und einen ersten Notfallbus 12, 12' (P2_{not,phase}, P2ₙₒₜ) und ein diesen zugeordnetes erstes elektromechanisches Relais 13 umfasst, sowie einen zweiten Stromversorgungsbus 14, der - jedoch gegenüber dem ersten Normal- und Notfallbus spiegelbildlich angeordnet - einen zweiten Normalbus 15, 15' und einen zweiten Notfallbus 16, 16' und ein diesen zugeordnetes zweites elektromechanisches Relais 17 umfasst, zugeführt. Das erste Relais 13 ist zur Zuführung des Stroms P1 elektrisch an den ersten Normalbus 11, 11' angeschlossen, während das zweite Relais 17 elektrisch zur Zuführung des Stroms P2 mit dem zweiten Notfallbus 16, 16' verbunden ist.

Die einzelnen Leitungen (phase und neutral) des Normalbus 11, 11'; 15, 15' und des Notfallbus 12, 12'; 16,16' sind in dem Stromversorgungsbus im Wechsel angeordnet und jeweils über das betreffende Relais 13 bzw. 17 verbunden. In der vorliegenden Ausführungsform sind die beiden Relais' 13 und 17 den beiden Zündeinheiten 1 und 2 in Form einer Zusatzbox vorgeschaltet. Die Relais' können jedoch auch in die jeweilige Zündeinheit 1, 2 oder auch in die jeweilige Steuereinheit 8, 9 integriert sein.

Wie die Zeichnung zeigt, erhält die erste Zündeinheit 1 von der ersten Steuereinheit 8 ein Signal "on" zur Stromversorgung (P1) über den Normalbus 11, 11' und das erste Relais 13, um letztlich den/die Zündfunken 7 an der Zündkerze 5 zu erzeugen. Falls die Stromzufuhr P1 über den Normalbus 11, 11' aufgrund eines Fehlers unterbrochen ist, wird das Relais 13 stromlos und seine federbelasteten Schalter 18 verbinden die erste Zündeinheit 1 automatisch mit dem Notfallbus 12, 12' (phase und neutral), um jetzt den Strom P2 zuzuführen. Analog würde bei einem entsprechenden "on"-Befehl auch die Stromversorgung der zweiten Zündeinheit 2 erfolgen, die über den zweiten Notfallbus 16, 16' im Stromversorgungsbus 14 mit Energie P2 versorgt wird. Sofern die Stromversorgung mit der Energie P2 über diesen Notfallbus 16, 16' ausfällt, werden die jetzt nicht mehr durch das Relais gehaltenen federbelasteten Schalter des zweiten Relais' 17 mechanisch auf die Anschlüsse (phase und neutral) des für die Zuführung der Energie P1 zuständigen Normalbus 15, 15' verstellt.

Somit ist gewährleistet, dass die Zündspule, deren Stromzuleitung ausgefallen ist, dennoch mit Strom versorgt wird.

### Bezugszeichenliste

- 1: erste Zündeinheit
- 2: zweite Zündeinheit
- 3: erste Zündleitung
- 4: zweite Zündleitung
- 5: erste Zündkerze
- 6: zweite Zündkerze
- 7: Zündfunke
- 8: erste Steuereinheit
- 9: zweite Steuereinheit
- 10: erster Stromversorgungsbus
- 11, 11': erster Normalbus (P1norm)
- 12, 12': erster Notfallbus (P2not)
- 13: erstes Relais
- 14: zweiter Stromversorgungsbus
- 15, 15': zweiter Normalbus (P1norm)
- 16, 16': zweiter Notfallbus (P2not)
- 17: zweites Relais

## Patentansprüche

1. Zündanlage für ein Gasturbinentriebwerk, mit jeweils an erste und zweite Zündkerzen (5; 6) angeschlossenen ersten und zweiten Zündeinheiten (1; 2), die jeweils mit einem ersten und zweiten Stromversorgungsbus (10; 14) für einen Strom (P1; P2) und einer ersten und zweiten Steuereinheit (8; 9) zur Aktivierung der Stromzufuhr verbunden sind, **dadurch gekennzeichnet, dass** jeder Stromversorgungsbus (10; 14) jeweils einen Normalbus (11, 11'; 15, 15') für den Strom P1 und jeweils einen Notfallbus (12, 12'; 16, 16') für den Strom P2 und jeweils ein Relais (13; 17) umfasst, das im ersten Stromversorgungsbus (10) elektrisch mit dem Normalbus (11, 11') für den Strom P1 und im zweiten Stromversorgungsbus (14) elektrisch mit dem Notfallbus (16, 16') für den Strom P2 verbunden ist, und das bei Ausfall einer Stromsuführ automatisch mechanisch auf die jeweils andere Stromzufuhr des betreffenden Stromversorgungsbusses (10; 14) umschaltet.

2. Zündanlage nach Anspruch 1, **dadurch gekennzeichnet, dass** das Relais (13; 17) der Zündeinheit (1, 2) in einer separaten Box vorgeschaltet ist oder in die Zündeinheit (1; 2) oder in die Steuereinheit (8, 9) integriert ist.

3. Zündanlage nach Anspruch 1 oder 2, **dadurch gekennzeichnet, dass** in dem Stromversorgungsbus (10; 14) die einzelnen Leitungen des Normalbus und des Notfallbus im Wechsel angeordnet sind.

4. Zündanlage nach einem der Ansprüche 1 bis 3, **dadurch gekennzeichnet, dass** der Normal- und Notfallbus in dem zweiten Stromversorgungsbus spiegelbildlich zum Normal- und Notfallbus im ersten Stromversorgungsbus angeordnet sind.

## Claims

1. Ignition system for a gas turbine engine, with each of the first and second ignition units (1, 2) being connected to first and second igniters (5, 6) and to a first and second power supply bus (10, 14) for power (P1, P2) and a first and second control unit (8, 9) for the activation of power supply, **characterized in that** each power supply bus (10, 14) includes a standard bus (11, 11'; 15, 15') for power P1 and an emergency bus (12, 12'; 16, 16') for power P2 and that, a relay (13, 17), which in the first power supply bus (10) is electrically connected to the standard bus (11, 11') for power P1 and in the second power supply bus (14) to the emergency bus (16, 16') for power P2, and that, in the event of a power supply failure, an automatic (mechanic) switchover is made to the respective other power supply of the corresponding power supply bus (10, 14).

2. Ignition system in accordance with Claim 1, **characterized in that** the relay (13, 17) is arranged ahead of the ignition unit (1, 2) in a separate box or is integrated into the ignition unit (1, 2) or into the control unit (8, 9).

3. Ignition system in accordance with Claim 1 or 2, **characterized in that** the individual lines of the standard bus and of the emergency bus are alternately arranged in the power supply bus (10, 14).

4. Ignition system in accordance with one of the Claims 1 to 3, **characterized in that** the standard and the emergency bus in the second power supply bus are in mirrored arrangement as compared to the standard and the emergency bus in the first power supply bus.

## Revendications

1. Système d'allumage destiné à un moteur à turbine à gaz, avec respectivement une première et une seconde unités d'allumage (1 ; 2) connectées à une première et à une seconde bougies d'allumage (5 ; 6) et respectivement reliées à un premier et à un second bus d'alimentation en courant (10 ; 14) pour un courant (P1 ; P2) et à un premier et à un second organes de commande (8 ; 9) pour activer l'arrivée de courant, **caractérisé en ce que** chaque bus d'alimentation en courant (10 ; 14) comprend respectivement un bus normal (11, 11' ; 15, 15') pour le courant P1 et un bus de secours (12, 12' ; 16, 16') pour le courant P2 ainsi qu'un relais (13 ; 17) qui est relié électriquement au bus normal (11, 11') pour le courant P1 dans le premier bus d'alimentation en courant (10) et au bus de secours (16, 16') pour le courant P2 dans le second bus d'alimentation en courant (14), et qui, en cas de défaillance d'une arrivée de courant, commute automatiquement (mécaniquement) sur l'autre arrivée de courant du bus d'alimentation en courant concerné (10 ; 14).

2. Système d'allumage selon la revendication n° 1, **caractérisé en ce que** le relais (13 ; 17) est placé en amont de l'unité d'allumage (1, 2) dans un boîtier distinct ou intégré dans l'unité d'allumage (1 ; 2) ou dans l'organe de commande (8, 9).

3. Système d'allumage selon la revendication n° 1 ou n° 2, **caractérisé en ce que** dans le bus d'alimentation en courant (10 ; 14), les différentes conduites du bus normal et du bus de secours sont disposés en alternance.

4. Système d'allumage selon une des revendications n° 1 à n° 3, **caractérisé en ce que** le bus normal et le bus de secours dans le second bus d'alimentation en courant sont disposés de manière réfléchie par rapport au bus normal et au bus de secours dans le premier bus d'alimentation en courant.
